(19) Europäisches Patentamt
European Patent Office
Office européen des brevets

(11) Publication number : **0 530 063 A1**

(12) # EUROPEAN PATENT APPLICATION

(21) Application number : **92402136.3**

(51) Int. Cl.$^5$ : **A01N 43/58,** A01N 47/02

(22) Date of filing : **23.07.92**

(30) Priority : **22.08.91 US 748625**

(43) Date of publication of application : **03.03.93 Bulletin 93/09**

(84) Designated Contracting States : **AT BE CH DE DK ES FR GB GR IT LI LU NL PT SE**

(71) Applicant : **ORSAN**
**16 rue Ballu**
**F-75009 Paris (FR)**

(72) Inventor : **Patterson, Thomas G.**
**4202 Echo Court**
**Pleasanton, California 94588 (US)**
Inventor : **Vega, Rene**
**1178 Onyx Road**
**Livermore, California 94550 (US)**
Inventor : **Deal, Luanne**
**1502 Isaacs Avenue**
**Walla, Walla, Washington 99362 (US)**

(74) Representative : **Phélip, Bruno et al**
**c/o Cabinet Harlé & Phélip 21, rue de La Rochefoucauld**
**F-75009 Paris (FR)**

(54) **Pollen suppressant for dicotyledon plants comprising a 5-oxy-substituted cinnoline.**

(57) Pollen is suppressed in dicotyledons by use of compounds of the formula

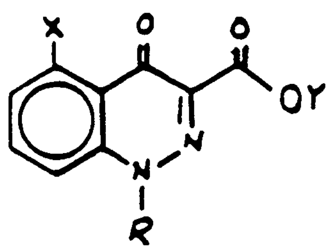

wherein X represents a group of the formula $OR^1$ wherein $R^1$ represents a $C_1$-$C_4$ alkyl optionally substituted with a $C_1$-$C_4$ alkoxy group or a $C_2$-$C_4$ alkenyl group ; R represents phenyl or phenyl substituted with one to three halogen atoms or $C_{1-4}$ haloalkoxy or an agriculturally acceptable salt thereof, are disclosed along with methods to produce hybrid seed in self-fertilizing plants.

EP 0 530 063 A1

Technical Field

The present invention relates to a method of regulating the fertility of dicotyledon plants using 5-oxy-substituted cinnoline compounds.

Background

It is possible to inhibit self-pollination in wheat and similar plants by chemically inhibiting the formation of pollen or by inducing the plant to produce non-functioning pollen. Several compounds have previously been developed which produce these effects.

U.S. patent no. 4,345,934 discloses a compound of the formula:

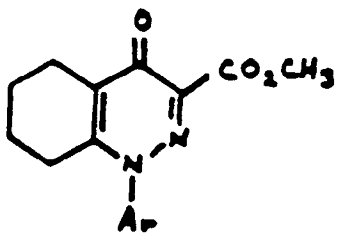

where Ar is 4'-chlorophenyl and an attempt to use this compound as a pollen suppressant. However, this compound was not active as a gametocide.

Zh. Obshch. Khim. (1967) 37:2487, as abstracted in Chem. Abstracts, (1968) 69:36059, discloses a compound of the formula:

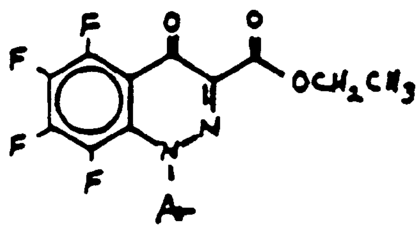

where Ar is phenyl substituted with halogen. However, this publication is directed only to synthesis and no use for the compound is disclosed.

U.S. patent nos. 4,604,134 and 4,729,782 disclose cinnolines with various substituents and the use of there compounds as chemical pollen suppressants. Some 5-alkoxycinnolines are encompassed by the generic formulas set forth in the patents, but such compounds are not emphasized, the preferred compounds being 5-fluorocinnolines. A 6-dimethylaminocinnoline derivative is listed as a typical compound, but no 5-alkoxycinnolines or derivatives thereof are specifically listed.

U.S. patent no. 4,915,727 discloses cinnolines with various 5-substitutions and a 1-(haloalkoxyphenyl)-substitution as male sterilants, particularly for wheat, rice and morning glory.

European patent no. 320,782 disclores cinnolines with a 5-haloalkoxy-substitution and certain 1-(substituted-phenyl)-substitutions as male sterilants, particularly for wheat, rice and morning glory.

Nevertheless, many of the compounds so far tested have adverse effects on hybrid seed quality or injure plants at doses only slightly above those required to produce maximum male plant sterility. Properties of prospective gametocides can vary with the chemical used and on the type of plant to be induced to male sterility. Accordingly, a continued need for new pollen suppressants useful for producing hybrid seed exists.

SUMMARY OF THE INVENTION

It is an object of this invention to provide a method of suppressing pollen production in dicotyledon plants using these certain cinnoline compounds.

It is a further object of this invention to provide a method for producing hybrid seed of dicotyledon plants using the chemical sterilants of the invention.

These and other objects of the invention as will hereinafter become more readily apparent have been accomplished by providing a chemical pollen suppressant of the formula:

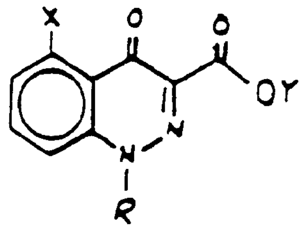

wherein X represents a group of the formula $OR^1$ wherein $R^1$ represents a $C_1$-$C_4$ alkyl optionally substituted with a $C_1$-$C_4$ alkoxy group or $C_2$-$C_4$ alkenyl;

Y is hydrogen or $C_1$-$C_6$ alkyl; and

R represents phenyl or phenyl substituted with one to three halogen atoms or $C_{1-C4}$ haloakoxy;

or an agronomically acceptable salt thereof.

DESCRIPTION OF THE PREFERRED EMBODIMENTS

The present invention provides certain cinnolines in which an alkoxy substituent is present at position 5 of the cinnoline ring and a 4′-halophenyl substituent at the 1 position of the cinnoline ring. Thus, the chemical pollen suppressants of the invention include those compounds having the formula:

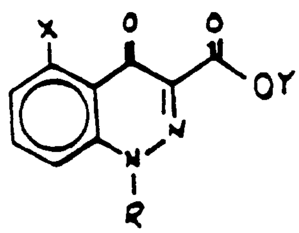

wherein X represents a group of the formula $OR^1$ wherein $R^1$ represents a $C_1$-$C_4$ alkyl optionally substituted with a $C_1$-$C_4$ alkoxy group or a $C_2$-$C_4$ alkenyl group;

Y is hydrogen or $C_1$-$C_6$ alkyl; and

R represents phenyl or phenyl substituted with one to three halogen atoms or $C_1$-$C_4$ haloalkoxy;

or an agronomically acceptable salt thereof.

Such compounds provide balanced malesterility activity and phytotoxicity when applied to dicotyledons and can be applied during different stages of growth over a wider range of dosages compared to the most closely related compounds that were previously known.

Particularly, it has been determined that phytotoxic side effects in dicotyledons are significantly less when X represents an alkoxy group as defined above. Additionally, compounds having alkoxy substituents at the 5 position and a phenyl or certain substituted phenyl substituents at the 1 position of the cinnoline ring also show a broader range of effective use, thereby providing advantageous compositions that do not require exact dosing under unstable field conditions.

Thus, the compounds of the invention provide a balance of overall properties including the ability to induce male sterility over a relatively large dose range (an important commercial asset because of the difficulty in even applications under field conditions and the industrial standards of 98% sterility), good seed set, and low photoxicity.

In one preferred embodiment of the invention, $-CO_2Y$ is a carboxy group or a salt thereof. When $-CO_2Y$ is a salt of a carboxy group, the cation can be an alkali metal ion, alkaline earth metal ion, or transition metal ion. The cation can also be an ammonium or substituted ammonium ion. Representative alkali metal ions, which are preferred, include lithium, sodium and potassium ions; representative alkaline earth metal ions include magnesium, calcium, and barium ions; representative transition metal ions include zinc, manganese, iron, titanium, and molybdenum ions; and representative ammonium ions, which are also preferred, include the ammonium ion itself and alkyl-substituted ammonium ions (especially alkanol-substituted ammonium ions).

The phenyl group R is preferably unsubstituted or 4′-substituted with one halogen atom, preferably with chlorine or fluorine; Y is H, Na or K; and X represents a group of the formula $OR^1$ wherein $R^1$ represents a $C_1$-

$C_4$ alkyl optionally substituted with a $C_1$-$C_4$ alkoxy group.

Preferred esters include those prepared from linear and branched $C_1$-$C_6$ alkanols.

At the Y location, tetrabutyl ammonium and tetramethyl ammonium salts are especially preferred along with ammonium salts containing alkanol substituents in place of alkyl substituents. Preferred $-CO_2Y$ groups are acids and acid salts, although esters as described above are nearly as preferred. Among acid salts, quaternary ammonium salts are preferred, as they enhance solubility. X is preferably a -OMe, -OEt, -OnPr, -OiPr, -OiBu, $-OCH_2CH_2OCH_3$, or $-OCH_2CH_2OCH_2CH_3$.

Preferred compounds are defined by relecting one or more of there listings of preferred substituents in combination with the general formula previously given. Certain combinations of substituents are especially preferred. One preferred grouping occurs when R is phenyl 4′-substituted with a chlorine or fluorine atom; Y is -H, -Na, or K; and X represents -OMe, -OEt, -OnPr, -OiPr, -OiBu, $-OCH_2CH_2OCH_3$, or $-OCH_2CH_2OCH_2CH_3$.

Preferred compounds are defined by selecting one or more of these listings of preferred substituents in combination with the general formula previously given. Certain combinations of substituents are especially preferred. One preferred grouping occurs when R is phenyl 4′-substituted with a chlorine or fluorine atom; Y is -H, -Na, or K; and X represents -OMe, -OEt, $-OCH_2CH_2OCH_3$, or $-OCH_2CH_2OCH_2CH_3$.

Also included within the scope of the invention are agronomically acceptable acid addition salts of compounds having the general formula given. Typical acid addition salts are those formed with strong acids such as hydrochloric, hydrobromic, and sulfuric acids. Salts of acidic or basic functional groups, such as the $-CO_2Y$ or -X groups, are also included in this invention. Throughout this application, agronomically acceptable salt means that the salt is not substantially more toxic to the plant or to the consumer of the plant than the parent compound from which the salt is formed.

Typical compounds of the invention include the following:

1-(4′-chlorophenyl)-1,4-dihydro-4-oxo-5-ethoxycinnoline-3-carboxylic acid
1-(4′-fluorophenyl)-1,4-dihydro-4-oxo-5-ethoxycinnoline-3-carboxylic acid
1-(4′-chlorophenyl)-1,4-dihydro-4-oxo-5-n-propyloxycinnoline-3-carboxylic acid
1-(4′-chlorophenyl)-1,4-dihydro-4-oxo-5-methoxycinnoline-3-carboxylic acid
1-(4′-fluorophenyl)-1,4-dihydro-4-oxo-5-i-butoxycinnoline-3-carboxylic acid
1-(4′-trifluoromethoxy phenyl)-1,4-dihydro-4-oxo-5-methoxycinnoline-3-carboxylic acid

as well as the ammonium, sodium, potassium, and lithium carboxylate salts of each of the above compounds and the acid addition salts of each of the above listed compounds. By carboxylate salt is meant a salt of a carboxylic acid group at C-3. By acid addition salt is meant a salt formed by the protonation of a ring or side chain nitrogen.

The compounds of the invention can be synthesized according to known methods for the production of analogous compounds or can be produced by synthetic modification of known pyridazinones or cinnolines. For example, numerous synthetic pathways to cinnolines are described in Condensed Pyridazines Including Cinnolines and Phthalazines, R.N. Castle, ed., John Wiley and Sons, N.Y., 1973, pages 1-321 of which are herein incorporated by reference. For example, one suitable method involves the reaction of readily accessible diethyl mesoxalate diphenylhydrazones of the formula:

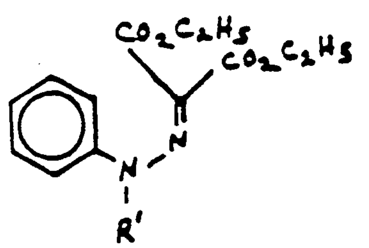

in which R′ represents a substituted phenyl group previously named, with an ethanolic base to give a dicarboxylic acid. This acid is converted into a diacid chloride using a suitable reagent, such as thionyl chloride. The acid chloride then undergoes a Friedel-Crafts acylation reaction, for example in nitrobenzene at about 100°C in the presence of $TiCl_4$. A product having the following formula is obtained:

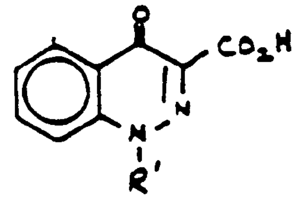

wherein R′ has the previously given meanings. Although this reaction is shown with an unsubstituted phenyl group for the sake of simplicity, aromatic rings substituents, such as substituents in the 4′-position, may also be present, although at least one ortho position of the diphenylhydrazone must be free in order that the Friedel-Crafts reaction can take place. Groups that would interfere with this ring-forming reaction may be present in protected form (e.g., an acylamino group that may later be converted into an amine) or they may be added later (e.g., by halogenation of the phenyl rings) or they may be prepared by conversion of a suitable group present during synthesis.

Another general synthetic method for synthesizing compounds of the invention is described in Synthesis, pages 52-53 (1983), which is also herein incorporated by reference. In this reaction sequence, the key step is condensation of an intermediate of the formula:

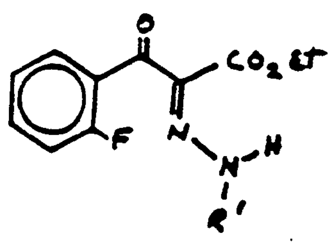

where R′ has the meanings previously defined and F may optionally be a nitro group rather than fluorine. This reaction is also shown for simplicity as forming an unsubstituted cinnoline.

The above-indicated 3-carboxycinnolines can then be converted into other compounds of the invention by known methods. For example, the carboxylic acid group can be converted into a carboxylate salt or a protected amino group can be deprotected, diazotized, and converted into a different functional group.

Various modifications of these reactions and of other reactions capable of modifying the initially formed cyclic compounds can be used to produce all the compounds of the present invention, for example, as is disclosed in four of the prior art patents previously cited (U.S. 4,345,934, U.S. 4,115,727, DOS 28 08 795, EP 37 133, EP 320 782, and EP 49 971), which are herein incorporated by reference.

A series of compounds has been synthesized using techniques such as the methods described above, and some of these compounds have been tested for ability to induce male sterility in dicotyledons using the procedure set forth in Examples 2 and 3 which follows. Representative compounds are shown in Table 1 below. Some of those compounds are used in male sterility induction experiments as salts.

EXAMPLE 1 -- Synthesis of 1-(4′-chlorophenyl)-1,4-dihydro-4-oxo-5-fluorocinnoline-3-carboxylic acid

Using the general procedure of Wierenga and Skulnick (J. Org. Chem. (1979) 44:310), a solution of 3.0 g (22.6 mmole) of monoethyl malonate in 40 ml of dry tetrahydrofuran (THF) containing 2 mg of 2,2′-dipyridyl was treated at -75°C with 29.2 ml of 1.5 M butyllithium (45.28 mmole) in hexane in such a way that the temperature was maintained below -60°C. The temperature was allowed to reach -5°C and lowered again to -70°C at which time 11.32 mmole of 2,6-difluorobenzoyl chloride in 15 ml of dry THF was added while the temperature was maintained at or below -60°C. The mixture was allowed to reach room temperature over 2 hours with continual stirring. After dilution with ether and treatment with 40 ml of 1N HCl, the mixture was worked up in the normal fashion to provide, after distillation of the organic residue, 6.9 g (67%) of product b.p. 117-119°C/l Torr.

A solution of the benzoylacetate (38.8 g, 0.17 mole) in aqueous methanol containing 0.51 mole of potassium acetate was treated with an aqueous solution of p-chlorophenyldiazonium chloride (derived from 0.18 mole p-chloroaniline) at 10-15°C. The resulting precipitate was recrystallized from aqueous methanol, dried in vacuo overnight and then dissolved in 300 ml of dry DMF. To this solution was added 11.0 g of anhydrous potassium carbonate and 50 mg of 18-crown-6. The mixture was heated with stirring to 100°C for 1 hour. The reaction mixture was cooled and diluted with water, and the precipitate was collected and dried to yield 39 g

of the desired cinnoline carboxylate ethyl ester m.p. 158-160°C. The acid desired was obtained by saponification in ethanol at room temperature containing one equivalent of potassium hydroxide, reacidification and filtration of the resulting precipitate, m.p. 246-247°C.

EXAMPLE 1A -- General Procedure for the Synthesis of 5-alkoxycinnolines From 5-halo Precursors

To one equivalent of the 5-halo precursor, which can be prepared according to the procedure set forth in Example 1, in a solution of dioxane is added a solution of the desired potassium alkoxide in paradioxane. The mixture is stirred in an inert atmosphere at room temperature with mild heating used in more sluggish cases. The course of the reaction is monitored by high-pressure liquid chromatography (HPLC). When the reaction is complete, the pH is adjusted to pH 4, the mixture is diluted with water, and the precipitated product is filtered to yield the desired 5-alkoxy derivative (yields normally are in excess of 90%).

Table 1

Synthesized Compounds of the Invention

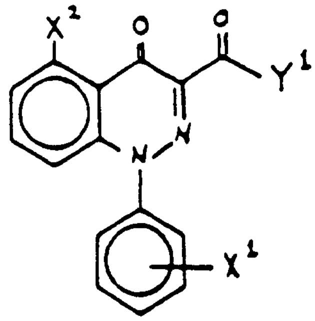

| Compound | $X^1$ | $X^2$ | $Y^1$ |
|---|---|---|---|
| 1 | 4'-Cl | $OCH_3$ | $OCH_3$ |
| 2 | 4'-Cl | $OCH_3$ | OH |
| 3 | 4'-Cl | $OCH_2CH_3$ | OH |
| 4 | 4'-Cl | OiPr | OH |
| 5 | 4'-F | $OCH_3$ | OH |
| 6 | 4'-F | $OCH_2CH_3$ | OH |
| 7 | 4'-F | OiPr | OH |
| 8 | 4'-Cl | $O\text{-}n\text{-}C_4H_9$ | OH |
| 9 | 4'-F | $O\text{-}n\text{-}C_4H_9$ | OH |
| 10 | 4'-Cl | $OCH_2CH_2OCH_3$ | OH |
| 11 | 4'-F | $OCH_2CH_2OCH_3$ | OH |
| 12 | 4'-Cl | $OCH_2CH(CH_3)_2$ | OH |
| 13 | 4'-F | $OCH_2CH(CH_3)_2$ | OH |
| 14 | 4'-Cl | $OCH_2CH_2OCH_2CH_3$ | OH |
| 15 | - | $OCH_3$ | OH |
| 16 | 2'-F | $OCH_3$ | $OCH_3$ |
| 17 | 2'-F | $OCH_3$ | OH |

| | | | |
|---|---|---|---|
| 18 | 2',3'-diF | $OCH_3$ | OH |
| 19 | 3',4'-diF | $OCH_3$ | OH |
| 20 | 2'-F,4'-Cl | $OCH_3$ | OH |
| 21 | 2'-Cl | $OCH_3$ | OH |
| 22 | 2',4'-diCl | $OCH_3$ | OH |
| 23 | 4'-$OCF_3$ | $OCH_3$ | OH |
| 24 | 2'-F,4'-Cl | $OCH_3$ | OH |
| 25 | 2',4'-diF | $OCH_3$ | OH |
| 26 | 2',4',6'-triF | $OCH_3$ | OH |
| 27 | 3'-F,4'-Cl | $OCH_3$ | OH |
| 28 | 3'4'-diCl | $OCH_3$ | OH |
| 29 | 3'-F | $OCH_3$ | OH |
| 30 | 2',5'-diF | $OCH_3$ | OH |
| 31 | 3',4'-diF | $OCH_2CH_3$ | OH |
| 32 | 3',4'-diF | $OCH(CH_3)2$ | OH |
| 33 | 2',3' diF | $OCH_2CH_3$ | OH |
| 34 | 2',3'-diF | $OCH(CH_3)_2$ | OH |
| 35 | 2',6'-diF | $OCH_3$ | OH |
| 36 | 2',6'-diF | $OCH_2CH_3$ | OH |
| 37 | 2',6'-diF | $OCH(CH_3)_2$ | OH |
| 38 | 2'-F, 4'-Cl | $OCH_2CH_3$ | OH |
| 39 | 2'-Cl,4'-F | $OCH(CH_3)_2$ | OH |
| 40 | 3'-Cl,4'-F | $OCH_2CH_3$ | OH |
| 41 | 3'-Cl,4'-F | $OCH_3$ | OH |
| 42 | 2'-Cl,4'-F | $OCH_2CH_3$ | OH |
| 43 | 2'-Cl,4'-F | $OCH(CH_3)_2$ | OH |
| 44 | 3'-Cl,4'-F | $OCH(CH_3)_2$ | OH |
| 45 | 2',4'-diF | $OCH(CH_3)_2$ | OH |
| 46 | 2',4'-diF | $OCH_2CH_3$ | OH |
| 47 | 4'-$OCF_3$ | $OCH(CH_3)_2$ | OH |
| 48 | 4'-$OCF_3$ | $OCH_2CH_2CH_2CH_3$ | OH |
| 49 | 3'-F,4'-Cl | $OCH_2CH_2CH_3$ | OH |
| 50 | 4'-$OCF_3$ | $OCH_2CH_2CH_3$ | OH |
| 51 | 4'-$OCF_3$ | $OCH_2CH(CH_3)_2$ | OH |
| 52 | 2'-4'-diF | $OCH_2CH_2CH_3$ | OH |
| 53 | 2'-F | $OCH_2CH_2CH_3$ | OH |
| 54 | - | $OCH_2CH_2CH_3$ | OH |
| 55 | - | $OCH_2CH = CH_2$ | OH |

Compounds of the invention are useful as chemical hybridization agents in dicotyledon crop plants, such as tomatoes, melons, sunflowers, canola, sugar beets, cowpeas, bush beans crops and the like. Of there, treatment of tomatoes is preferred. Different effects will be obtained depending upon the growth stage of the plant

when treated. Compounds of the invention induce selected male sterility without also inducing unacceptable female sterility. About 30% female fertility is generally acceptable, although this level may differ when the method is used commercially, bared on the economics of $F_1$ seed production. As used herein, the term male sterility includes sterility caused by lack of male flower parts, by formation of sterile pollen, and by male flower parts which produce normal pollen but are functionally unable to cause pollination.

When compounds of the invention are used in hybridization, they are used in an amount sufficient to produce the effect of male sterility without producing an unacceptable phytotoxic reaction or other undesired side-reaction. Compounds of the invention are generally applied at a rate of from 0.025 to 20.0 pounds per acre, and preferably from 0.125 to 10.0 pounds per acre. The amount used depends upon the plant type and the method of application as is well-known to those skilled in the art and can be determined by simple experimentation if not known.

Although any method of hybridization may be used, the following method generally is sufficient. The two parent strains to be crossed are planted in alternate sections, rows, or groups of rows. The female parent is treated with a compound of the invention in order to render this female parent male sterile. Pollen from the male (untreated) parent then fertilizes the female parent, either by means of human intervention or preferably by means of a natural process, such as windborne or insect pollination. The seed produced by the female parent is an F-l hybrid, which is then collected according to conventional techniques.

Compounds of the invention are very effective for inducing male sterility in dicotyledons when they are applied to the medium in which plants are grown, such as soil surface in a tomato field. Another method of applying the compounds of the invention for otherwise inducing male sterility is foliar application directly to the plant leaves. When this method is used, very selective male sterility can be obtained when the compound is applied between the beginning of bloom and the beginning of meiosis. Compounds of the invention can also be applied directly to seed in order to cause male sterility, whereby the seeds are dipped into a fluid formulation containing the active ingredient. Seed can also be sprayed with a solution or suspension containing a compound of the invention. In general, seed are treated with a compound of the invention in an amount of from about 1/4 to 10 pounds per 100 pounds of seed.

Compounds of the invention can be used as hybridization materials together with other plant regulatory agents, for example, in mixtures with these compounds. Examples of plant regulating materials which can be used include auxins, gibberellins, ethylene liberating materials such ag Ethephon, pyridones, cytokinins, maleic hydrazide, carbonic acid, 2,2-dimethyl hydrazide, cholines (as well as their salts), (2-chloroethyl)trimethylammonium chloride, triiodobenzoic acid, tributyl-2,4-dichlorobenzene-phosphonium chloride, polymeric N-vinyl-2-oxazolidinones, tri(dimethylaminoethyl)phosphate, and salts of these compounds as well as N-dimethylamino 1,2,3,6-tetrahydro-phthalamides and their salts. Compositions containing one or more compounds of the invention in a 1:99-99:1 ratio to one or more different compounds having plant regulatory activities may be prepared. Likewise, compounds of the invention may be prepared into compositions useful for other agricultural purposes, such as herbicides, fungicides, insecticides, and plant bactericides.

A compound of the invention can be applied to a plant or the medium in which the plant is growing or is to be grown either as itself or in combination with other plant growth regulators. A composition containing a compound of the invention and any other active ingredient can be diluted with an agronomicallly suitable carrier, which is any substance which itself is without any significant effect on plants but which is added in order to allow simpler application of the active ingredients to plants or the growth medium. Carriers include both liquids and solids. Accordingly, compositions of the invention can be either solid or liquid formulations or solutions. For example, the compounds can be used in powders, emulsifiable concentrates, dusts, pellets, aerosols and solutions. In any of the various formulations, a surface active agent may be added in order to increase uptake of the active compounds. It is especially preferred, and particular for methods which involve application to leaves, to utilize agents which aid in the application of the material, for example, dispersion agents and detergents.

Compounds of the invention can be dissolved in any suitable solvent. Examples of solvents which can be used include water, alcohols, ketones, aromatic hydrocarbons, halogenated hydrocarbons, dimethylformamide, dioxane, and dimethylsulfoxide. Mixtures of these solvents can likewise be used. The concentration of these solutions can be from about 2 to about 98% by weight of active ingredient and is preferred to be in the range from about 20 to about 75% by weight.

In order to produce emulsifiable concentrates, the compounds of the invention are dissolved in an organic solvent, such as benzene, toluene, xylene, methylated naphthalene, corn oil, terpentine, odichlorobenzene, isophorone, cyclohexane, or methyl oleate or in mixtures of these solvents, together with an emulsifying material which allows the dispersion in water. Suitable emulsifying agents include ethylene oxide derivatives of alkylphenols or long-chained alcohols, mercaptans, carboxylic acids, and reactive amines, and especially high molecular weight alcohols. Solvent-soluble sulfates or sulfonates, such as the alkaline earth salts or amine

salts of alkylbenzenesulfonates as well as sodium fatty alcohol sulfates with surface active properties can be utilized as emulsifying agents either alone or in combination with an ethylene oxide reaction product. Free-flowing emulsion concentrates are formulated similarly to emulsifiable concentrates and contain, in addition to the previously described components, water as well as a stabilizing agent, such as a water-soluble cellulose derivative or a water-soluble salt of a polyacrylic acid. The concentration of the active ingredient in the emulsifiable concentrate is generally about 10 to 60 wt. % and in free-flowing emulsion concentrates is generally about 10 to 60% or sometimes up to 75% by weight.

When a powder containing the compound of the invention is being prepared, the active ingredient is usually mixed with a finely divided solid, such as a clay, an organic silicate or carbonate, or a silica gel along with an agent capable of holding together the resulting materials. The concentration of the active ingredient in such powders generally lies between about 20 and 98% by weight and preferably lies between 40 and 75% by weight. A dispersion material can generally be present in an amount of about 0.5 to 3% by eight of the entire powder. An agent may be added in order to control water absorption and if added is generally present in an amount of about 0.1 to about 5% by weight of the total powder.

Dusts can be prepared by mixing the active ingredient with a finely divided inert solid, which can be of an organic or inorganic nature. Suitable material for this purpose include flour, farina, diatomite, silicates, carbonates, and clays. A satisfactory method for the production of dusts involves crushing a wettable powder together with a finely divided carrier. A dust concentrate, which contains from about 20 to about 80% of the active ingredient, is produced according to known methods and then diluted to form a final concentration of the compound of the invention of about 1 to about 10% by weight of the dust.

Particulate formulations can be prepared by any known method, for example by impregnating the active ingredient into a solid material, such as particulate Fullers earth, vermiculite, cornmeal, reed hulls such as grain hulls, or other materials. A solution of one or more of the compounds of the invention in a freely flowing organic solvent can be applied to the particulate solid or mixed therewith, after which the solvent is evaporated away. The particulate material is not limited to a particular size. However, a useful size is from 16 to 60 mesh (U.S. standard mesh size). The active ingredient generally occupied about 2 to about 15 wt. of the particulate formulation.

Salts of the compounds of the invention can be prepared as aqueous solutions and applied in this form. The salts occupy typically about 0.05 to about 50 wt. % and preferably from about 0.1 to 10 wt. % of the solution. In any event, these solutions may be diluted with additional water prior to use. In some cases the activity of the active material can be increased by including another agent in the solution, such as glycerin, methylethylcellulose, hydroxyethyl cellulose, polyoxyethylene sorbital mono-oleate, polypropylene glycol, polyacrylic acid, polyethylene sodium malonate, or polyethyleneoxide. The auxiliary occupies generally from about 0.1 to about 5 wt. % and particularly from about 0.5 to 2 wt. % of the solution. The various solutions can in any case also contain an agriculturally suitable surface active agent.

The compounds of the invention can be applied according to any known methods, for example in the form of hydraulic sprays, air sprays or dusts. For methods which involve the application of small volumes, a solution of the compound is generally utilized. The volume used and the rate of application depend upon various factors which vary with the method used, such as the specific type of application method, the stage of development of the plant to which the active ingredient is being applied, and other factors well known to those skilled in the art or easily determined by simple experimentation.

Having now generally described this invention, the same will be better understood by reference to certain specific examples which are included herein for purposes of illustration only and are not intended to be limiting of the invention or any embodiment thereof, unless so specified.

## EXAMPLE 2: Tomatoes

A biological assay for pollen suppression was conducted using several tomato varieties. Compounds of the invention were applied as solutions in water or water/acetone (5-50% acetone) or as aqueous emulsions at the rate of 0.1 to 3.0 kg/ha. In either case, 0.1% Triton X-100 or 0.2% Triton Ag-98 was used as a wetting agent. Plants were sprayed with a test solution and then replaced in the greenhouse in such a way that control plants were interspersed with treated plants.

Several genotypes of tomatoes were obtained from the University of California, Davis. Seeds were grown in pots under greenhouse conditions. Compounds 15 and 10 of the invention were applied to the tomato plants to study the induction of male sterility in tomatoes. The compounds were applied as a foliar spray to the leaves and as a root drench directly to the soil in the pot in which the tomato plants were growing.

To evaluate male sterility induction in tomatoes, a system of tagging individual flower stalks (cymes) was developed. Since tomatoes have an indeterminant flowering pattern, cymes were tagged at about 1 week intervals beginning about one month after treatment. The number of tomatoes forming at each cyme for each tagging date were counted and compared to the control.

A singular foliar application experiment was conducted on genotype UC204A tomatoes.

TABLE 2

FOLIAR TREATMENTS OF UC204A TOMATOES

TOMATOES PER CYME

| Compound 10 (kg/ha) | Tagging Date 1 | 2 | 3 | 4 |
|---|---|---|---|---|
| 0.0 | 2.6 | 2.4 | 3.4 | 1.8 |
| 0.1 | 2.9 | 2.4 | 3.4 | 1.8 |
| 0.2 | 3.3 | 2.3 | 3.1 | 2.1 |
| 0.4 | 2.7 | 2.5 | 2.5 | 3.5 |
| 0.8 | 2.2 | 2.4 | 2.9 | 2.5 |
| 1.4 | 2 | 1.6 | 2.9 | 2.5 |
| 2.0 | 1.2 | 2.2 | 1.4 | 3.2 |
| 3.0 | 0.2 | 1.6 | 2.5 | 2.6 |

TABLE 3

FOLIAR TREATMENTS OF UC204A TOMATOES

TOMATOES PER CYME

| Compound 15 (kg/ha) | Tagging Date 1 | 2 | 3 | 4 |
|---|---|---|---|---|
| 0.0 | 2.6 | 2.4 | 3.4 | 1.8 |
| 0.1 | 1.5 | 1.4 | 1.9 | 2.5 |
| 0.2 | 1.5 | 1.4 | 1.9 | 2.5 |
| 0.4 | 1 | 2.1 | 1.8 | 2.8 |
| 0.8 | 0 | 0.4 | 1.3 | 2.2 |
| 1.4 | 0 | 0 | 0.7 | 1.7 |
| 2.0 | 0.5 | 0 | 1 | 1.7 |

The results shown in Tables 2 and 3, demonstrate that Compound 15 was the most effective in inducing male sterility in tomatoes. However, Compound 15 caused more phytotoxicity than compound 10 (Data not shown). Compound 10 was more effective inducing male sterility at 2.0 and 3.0 kg/ha treatments at the first flower tagging date. Fertility in the later flowers recovered from the chemical treatment. This suggests that multiple foliar applications may be desirable to effectively induce prolonged male sterility in this tomato genotype.

Root drench application of the Compound 10 of the invention to tomatoes proved to be extremely effective means to deliver the pollen suppressant compound to the tomato plant. Tables 4 and 5 show the results of soil drench application to tomato genotypes LA-12 and LA490, respectively.

TABLE 4

SOIL APPLIED TREATMENTS OF LA-12 TOMATOES

TOMATOES PER CYME

| Compound 10 (kg/ha) | Tagging Date 1 | 2 | 3 | 4 |
|---|---|---|---|---|
| 0.0 | 3 | 2 | 3 | 2 |
| 22.7 | 1.75 | 0.5 | 1.96 | 0.5 |
| 50.0 | 1 | 0.25 | 0.5 | 0.25 |
| 75.0 | 0.5 | 0 | 0.75 | 0.25 |
| 150 | 0 | 0 | 0.75 | 0.25 |
| 225 | 0.25 | 0 | 0 | 0 |
| 300 | 0 | 0 | 0 | 0 |

TABLE 5

LA490 TOMATOES SOIL DRENCH

TOMATOES PER CYME

| Tagging Date After Treatment | mg Compound 10 Per Pot 0.0 | 12.5 | 22.5 | 50 | 75 | 150 | 225 | 300 |
|---|---|---|---|---|---|---|---|---|
| 1 Week | 2.5 | 1.6 | 2 | 2 | 2.7 | 1 | 2.5 | 3 |
| 4 Weeks | 2.4 | 1.9 | 1.8 | 2 | 0.3 | 0 | 0 | 0 |
| After 5 Weeks | 3 | 1 | 1.4 | 1 | 0 | 0 | 0 | 0 |

In LA490 tomatoes, the application of the compounds of the invention was too late to induce sterility in the first flowers. However, later flowers showed good male sterility at dosages from 75 to 300 mg of Compound 10 per pot. The LA-12 tomatoes were induces to male sterility by the dosages of Compound 10 of between 50 and 300 mg/pot, with almost no tomatoes forming on plants treated at the highest doses.

A limited number of hand pollinations of flowers on plants that were male sterile were done. Fruit set occurred at these flowers, demonstrating that female fertility was not adversely affected by treatment with the compounds of the invention.

Example 3: Watermelons

All watermelon plants were grown in pots under greenhouse conditions. Compound 10 of the invention was applied to the melon plants at the following dosages:
Dosage A = 0.27 g in 250 ml of distilled water,
Dosage B = 0.55 g in 250 ml of distilled water, and
Dosage C = 0.82 g in 250 ml of distilled water. The control was 250 ml of distilled water.

Sterility was determined by collecting pollen and streaking it onto a growth media. Visual assessments were made for pollen tube growth and noted as a (+) or (-) percentage of the estimated total possible pollen growth. The results were as follows.

Variety 1 [INBRED 14] Plants were treated with Compound 10 of the invention by foliar application only once 12-25 days after planting, and began showing pollen sterility in 12-14 days. Pollen growth resumed 2-4 days later. Dosages B and C were effective in stopping pollen growth but dosage A was not. Plants were pruned

back to 4 or 5 nodes 28 days after planting and then sprayed weekly. These plants began showing sterility in 12-14 days. Pollen sterility was sustained for up to 9 days with dosage A, B and C beginning 16 days after initial spray application. Pollen growth was normal in all untreated checks. There was no indication that the compound induced female sterility.

Variety 2 [INBRED 11] This variety was slow to produce flowers so data from this experiment can vary as compared to other varieties treated. The plants of variety 2 were treated by foliar application only once 13-25 days after planting. The treated plants began to show no pollen germination 18-23 days after spraying with Compound 10. Reduced pollen germination was maintained for 1-2 days and then sporadic pollen germination was seen for 2-8 days. Reduced pollen growth was achieved with all three dosages A, B and C. Plants were pruned back to 4 or 5 nodes 28 days after planting and then were sprayed weekly. These plants began showing reduced pollen germination in 15-18 days. Pollen sterility was sustained for 4-5 days, with dosages B and C. There was normal pollen germination and growth on all untreated control plants. Too few pistillate flowers were pollinated to determine if female sterility was induced.

Variety 3 [HONEY RED] Plants were treated by foliar application only once, 12-25 days after planting. The treated plants began showing pollen sterility in 6-14 days. Pollen growth resumed 2-5 days later. Dosages A, B, and C were all effective in stopping pollen growth. Plants were pruned back to 4 or 5 nodes 28 days after planting and were sprayed weekly. The treated plants began showing no pollen growth in 12-15 days. Sterility was sustained for up to 6 days and then the treated plants resumed sporadic germination at all dosages. Pollen growth was evident in all untreated controls. The Compound 10 treatment did not hinder female fertility.

Variety 4 [inbred 17] Plants are treated by foliar application only once 12-25 days after planting and began showing reduced pollen growth in 12-15 days. Pollen germination and growth resumed 2-4 days later. Dosages A, B, and C all induced male sterility, based on limited data due to slow male flower production. There was normal pollen growth in all untreated controls.

Limited female plants did not allow evaluation of female fertility.

Variety 5 [ND] Plants were treated by foliar application only once 12-25 days after planting and began showing sterility in 12-16 days. Pollen growth resumed 2-5 days later. Dosages A, B, and C were effective in stopping pollen growth. Plants were pruned back to 4 or 5 nodes 28 days after planting and sprayed weekly. These treated plants began showing no sterility in about 17 days. Sterility was sustained for an average of 6 days or more with all 3 dosages A, B, and C. Pollen growth was normal in all untreated controls. Female fertility was not induced.

Variety 6 [TETRA 4] Plants were treated with compound 10 of the invention by foliar application. The treated melons showed sporadic pollen germination throughout each experiment, regardless of plant growth stage, or interval of spraying. Untreated controls also showed sterility more than 50% of the time, suggesting that this variety does not have ccnsistent pollen viability and is not controlled by Compound 10.

Example 4: Sunflowers

Three genotypes of sunflowers Helianthus annuus were tested in Balcarce, Argentina by foliar application. Line 5B was used as the CHA treated female parent. Line JFR30 was used as a male pollen donor to evaluate female fertility on the CHA treated plants. To determine the viability of pollen from the CHA treated 5B plants a CMS line, 7A-CMS was pollinated with treated inflorescences of the 5B line. If no seed was formed on the CMS line pollinated with the treated 5B inflorescence, then it was assumed the pollen from the 5B plant was sterile.

Growth stages were identified by the diameter of the young inflorescence. This system of identifying growth stages has been used by other researchers studying chemical induction of male sterility in sunflowers. The 5B genotype was treated with CHA at 3 growth stages: 0.5 cm, 1.0 cm, and 1.5 cm inflorescence diameter.

Foliar CHA application were done using the standard spray equipment utilized for treatment of wheat. Application rates of 2.0, 3.0, 4.0, and 5.0 kg/ha were used with the standard Triton AG-98 formulation of Compound 10.

Glassine bags were placed on treated inflorescences to prevent outcrossing. Visual observations of phytotoxicity and male sterility were made. Outcrossing was determined by counting the seed set of the inflorescences. The results are summarized in Table 6 below:

Table 6

Effect of Compound 10 as a Chemical Hybridizing Agent on Sunflower (Helianthus Annuus)

| Dose kg/ha | Growth Stage cms/inflor-diam. | Male Sterility Visual Eval. No Line:5B | Outcrossing Seed/Inflor 5BxJFR30 | Outcrossing No Seed/Inflor 7A-CMSx5B |
|---|---|---|---|---|
| 2.0 | 0.5 | None | 20+ | 20+ |
| 3.0 | 0.5 | None | 20+ | 20+ |
| 4.0 | 0.5 | Partial | 20+ | 20+ |
| 5.0 | 0.5 | Partial | 20+ | 20+ |
| 2.0 | 1.0 | None | 20+ | 20+ |
| 3.0 | 1.0 | None | 20+ | 20+ |
| 4.0 | 1.0 | None | 20+ | 20+ |
| 5.0 | 1.0 | Partial | 20+ | 20+ |
| 2.0 | 1.5 | None | 20+ | 20+ |
| 3.0 | 1.5 | Partial | 20+ | 5 |
| 4.0 | 1.5 | Sterile | 20+ | 3 |
| 5.0 | 1.5 | Sterile | 20+ | 3 |
| Control | -- | None | 20+ | 20+ |

None = Normal amount of pollen.
Partial = Some indication of pollen reduction.
Sterile = Some or no pollen.
20+ = 20 or more seeds/infloresscence.

Growth stage 3 (1.5 cm inflorescence diameter) was the most responsive in this experiment. Earlier stages showed little or no response either visually or by pollinating the CMS line with the treated 5B line. At growth stage 3, visual male sterility was evident at 4.0 and 5.0 kg/ha application rates. Pollinating the CMS line with the treated inflorescences showed a reduced reed set, indicating male sterility. Thus, Compound 10 was an effective chemical hybridizing agent in sunflowers.

OTHER DICOTYLEDONS

Following standard test procedures similar to those described above, cowpeas, canola and bush beans were found to be induced to male sterility by foliar and/or root drench application of one or more compounds of the invention. At the dosages applied, soybean genotypes tested were not induced to male sterility.

All publications and patent applications mentioned in this specification are herein incorporated by reference to the same extent as if each individual publication or patent application was specifically and individually indicated to be incorporated by reference.

The invention now being fully described, it will be apparent to one of ordinary skill in the art that many changes and modifications can be made thereto without departing from the spirit or scope of the appended claims.

## Claims

1. A method of inducing male sterility in a dicotyledon plant, which comprises treating said plant, a seed from which said plant is to be grown, or a medium in which said plant is growing or is to be grown with a pollen suppressant of the formula

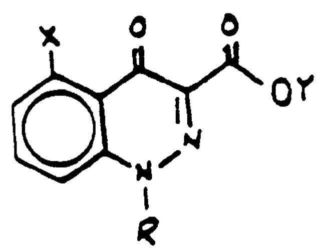

wherein:

X represents a group of the formula $OR^1$ wherein $R^1$ represents a $C_1$-$C_4$ alkyl group optionally substituted with a $C_1$-$C_4$ alkoxy group or a $C_2$-$C_4$ alkenyl group;

Y is hydrogen or $C_1$-$C_6$ alkyl; and

R represents phenyl or phenyl substituted with one to three halogen atoms or $C_1$-$C_4$ haloalkoxy; or an agronomically acceptable salt thereof.

2. The method of Claim 1, wherein Y is -H or a salt thereof.

3. The method of Claim 1, wherein X is $C_1$-$C_2$ alkoxy or $C_1$-$C_2$ alkoxy substituted with $C_1$-$C_2$ alkoxy.

4. The method of Claim 1, wherein R is phenyl or phenyl substituted with a substituent $X^1$ selected from the group consisting of 4′-chloro and 4′-fluoro.

5. The method of Claim 4, wherein R is phenyl substituted with $X^1$ wherein $X^1$ is 4′-F, X is $-OCH_3$, and Y is -H or a salt thereof.

6. The method of Claim 4, wherein R is phenyl substituted with $X^1$ wherein $X^1$ is 4′-Cl, X is $-OCH_2CH_2OCH_3$, and Y is -H or a salt thereof.

7. The method of Claim 1 wherein the plant is tomato, melon, sunflower, canola, cowpea or bush bean.

8. The method of Claim 7 wherein the plant is tomato.

9. The method of Claim 1 wherein the plant is treated by applying the pollen suppressant as an aqueous solution thereof to the medium in which said plant is growing.

10. A method of producing hybrid seeds from a self-pollenizing dicotyledon plant which comprises sterilizing the male anthers of a female parent plant with a pollen suppressant compound of Claim 1 and pollinating said female parent with pollen from an untreated male parent, thereby producing said hybrid seed.

11. The method of Claim 10, wherein said hybrid seed is seed from tomato, melon, sunflower, canola, cowpea or bush bean.

12. The method of Claim 11, wherein said seed is tomato seed.

European Patent Office

# EUROPEAN SEARCH REPORT

Application Number

EP 92 40 2136

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,X | EP-A-0 320 782 (SUMITOMO CHEMICAL)<br>* page 3, line 1 - line 46 *<br>* page 4, line 44 *<br>* page 10 - page 13; table 1 * | 1,2,4, 7-12 | A01N43/58<br>A01N47/02 |
| Y | | 3,5,6 | |
| X | EP-A-0 274 717 (SUMITOMO CHEMICAL)<br>* page 3, line 1 - line 46 *<br>* page 6, line 12 *<br>* page 12 - page 13; table 1 * | 1,2,3, 7-12 | |
| Y | | 4,5,6 | |
| D | & US-A-4 915 727 | | |
| Y | EP-A-0 363 236 (LAFARGE COPPEE)<br>* page 4, line 36 - page 6, line 26 *<br>* page 8 - page 10; table 1 * | 3-6 | |
| A | EP-A-0 136 974 (CIBA-GEIGY)<br>* page 10, paragraph 4 * | 1-12 | TECHNICAL FIELDS SEARCHED (Int. Cl.5 ) |
| A | EP-A-0 364 135 (IMPERIAL CHEMICAL INDUSTRIES)<br>* page 2, line 13 - line 52 *<br>* page 4, line 18 - line 24 * | 1-12 | A01N |
| A | EP-A-0 138 661 (LAFARGE COPPEE)<br>* the whole document * | 1-12 | |
| D | & US-A-4 604 134 | | |
| A | EP-A-0 197 226 (LAFARGE COPPEE)<br>* the whole document * | 1-12 | |

The present search report has been drawn up for all claims

| Place of search | Date of completion of the search | Examiner |
|---|---|---|
| THE HAGUE | 12 NOVEMBER 1992 | W. Lamers |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)